# EUROPÄISCHE PATENTSCHRIFT

(11) **EP 0 563 437 B1**
(45) Veröffentlichungstag und Bekanntmachung des Hinweises auf die Patenterteilung: **06.03.1996**
(21) Anmeldenummer: 92114700.5
(22) Anmeldetag: 28.08.1992
(51) Int. Cl.: F16D 1/06, F16C 33/04, F16C 17/22

(54) **Anordnung zur konzentrischen Positionierung eines ersten Teiles relativ zu einem zweiten Teil, insbesondere einer Büchse gegenüber einer Welle**
Arrangement for concentrically positioning a first-part relative to a second part, especially a sleeve on a shaft
Montage pour le positionnement concentrique d'une première pièce par rapport à une deuxième pièce, notamment un manchon sur un arbre

(30) Priorität: 31.03.1992 DE 9204349 U
(43) Veröffentlichungstag der Anmeldung: 06.10.1993
(73) Patentinhaber: Feodor Burgmann Dichtungswerke GmbH & Co., D-82515 Wolfratshausen (DE)
(72) Erfinder: Schicktanz, Rudolf, W-8190 Wolfratshausen (DE); Scherer, Hans-Georg, W-8192 Geretsried (DE)
(74) Vertreter: Schmidt, Horst, Dr.

(56) Entgegenhaltungen:
- EP-A- 0 118 056
- DE-A- 2 915 292
- DE-A- 3 219 006
- DE-B- 1 068 516
- FR-A- 1 285 181
- FR-A- 2 028 316
- GB-A- 1 437 532
- US-A- 2 921 822

## Beschreibung

Die Erfindung betrifft eine Anordnung zur konzentrischen Positionierung eines ersten Teiles relativ zu einem zweiten Teil, insbesondere einer Büchse gegenüber einer Welle, wobei die Teile aus Materialien mit unterschiedlichen Wärmeausdehnungskoeffizienten bestehen.

In zahlreichen Anwendungsfällen ist es erwünscht, für konzentrisch zueinander zu positionierende Teile unterschiedliche Materialen mit entsprechend unterschiedlichem Verhalten unter sich ändernden Temperaturen vorzusehen. Z. B. ist es häufig erwünscht, die Lagerschale eines Gleitlagers zur Verringerung des Verschleisses aus einem verschleissfesten Material, z.B. einem keramischen Material, auszubilden. Wenn eine derartige Lagerschale mit einem Bauteil, z.B. eine Welle, aus einem Stahlmaterial zusammenwirkt, treten Probleme infolge des um ein Vielfaches höheren Wärmeausdehnungskoeffizienten von Stahl gegenüber dem des keramischen Materials auf, so dass bei einem Einsatz des Gleitlagers bei höheren Temperaturen die Gefahr besteht, dass aufgrund der grösseren Wärmedehnung des metallischen Materials die Lagerschale zu Bruch geht. Ähnliche Verhältnisse treten bei tiefen Temperaturen auf, wenn das keramische Material die Schrumpfung des metallischen Materials behindert. In Kenntnis dieser Schwierigkeiten wurde schon vorgeschlagen, zwischen Lagerschale und Welle O-ringartige Zentrierungselemente vorzusehen, die eine Dehnung des metallischen Materials der Welle relativ zur Lagerschale ermöglichen. Nachteil dieser Lösung ist neben der geringen thermischen Beständigkeit der Zentriermittel eine in der Regel nicht ausreichende Zentrierung längs der axialen Länge der Lagerschale, die bei zahlreichen Anwendungsfällen nicht hingenommen werden kann, da sie Verschleiss und vorzeitiges Versagen an anderen Stellen eines Gerätes oder einer Maschine zur Folge haben kann. Bekannt ist ferner die Anordnung von sog. Toleranzbändern zwischen Lagerschale und Welle, d.h. Bänder mit wellenförmigem Querschnittsverlauf, die dadurch in radialer Richtung Federeigenschaft besitzen. Die erzielbare Genauigkeit der Zentrierung mittels solcher Toleranzbänder ist ebenfalls nicht zufriedenstellend, und ferner kann ein vorzeitiges Versagen der Lagerschale wegen der hohen lokalen Beanspruchungen an den Stellen auftreten, an denen das Toleranzband mit der Lagerschale in Berührung kommt. Eine ähnliche Anordnung ist aus der DE-C-37 06 365 bekannt, indem zwischen den zu zentrierenden Teilen ein hülsenförmiges Zwischenstück mit herausragenden zungenartigen Bereichen vorgesehen ist, die aus dem Zwischenstück in fertigungstechnisch aufwendiger Weise (Laserschneidverfahren) herausgeschnitten werden. Neben den vorerwähnten Nachteilen ist diese Lösung daher teuer und dürfte Montageprobleme bereiten.

Der Erfindung liegt die Aufgabe zugrunde, eine thermisch beanspruchbare Anordnung der eingangs erwähnten Art zu schaffen, die mit vergleichsweise geringem technischen Aufwand in wirtschaftlicher Weise eine präzise Zentrierung von Teilen mit unterschiedlichem Wärmeausdehnungsverhalten ermöglicht.

Diese Aufgabe wird durch die Merkmale im kennzeichnenden Teil des Patentanspruches 1 gelöst. Die Erfindung ermöglicht einerseits das Vorsehen eines so bemessenen radialen Spieles zwischen den zu zentrierenden Teilen, dass selbst bei maximalen Temperaturen stets ausreichend Raum für eine radiale Dehnung des sich stärker ausdehnenden Teiles zur Verfügung steht, ohne dass eine Berührung mit dem betreffenden anderen Teil befürchtet werden muss. Da hierbei die konzentrische Position der Teile nicht beeinträchtigt wird, kann das zu zentrierende Teil aus einem für gewisse Anwendungsfälle vorteilhaften verschleissfesten Material bestehen, selbst wenn dieses, wie z.B. keramisches Material, einen wesentlich geringeren Wärmeausdehnungskoeffizient wie Stahl besitzt. Dabei zeichnet sich die erfindungsgemässe Anordnung durch einen einfachen Aufbau aus, der weder fertigungstechnisch noch montageseitig Schwierigkeiten bereit. Da temperaturempfindliche Zentrierungsmittel, wie O-Ringe, entfallen, ist die Erfindung über weite Temperaturbereiche einsetzbar.

Ein Anwendungsgebiet der Erfindung ist die Zentrierung der Lagerschale eines Gleitlagers gegenüber einer Welle, wobei die Lagerschale aus einem verschleissfesten Material und die Welle aus Stahl bestehen kann. Derartige Gleitlager sind in verschiedenen Anwendungsgebieten vorteilhaft. Wegen der präzisen Zentrierung eignet sich die Erfindung insbesondere für die Zentrierung der Lagerschale der Gleitlageranordnung von Magnetkupplungen, da hierdurch enge Spalte zwischen den Magneten ermöglicht werden, was die magnetischen Verluste entspechend minimiert.

Die Erfindung wird nachfolgend anhand der Zeichnung näher erläutert. Es zeigen:
Fig. 1 in längsgeschnittener Ansicht eine erfindungsgemäss aufgebaute Zentrierungsanordnung bei einer Gleitlageranordnung,
Fig. 2 in fragmentarischer längsgeschnittener Ansicht eine Magnetkupplung mit einer Gleitlageranordnung mit Merkmalen der Erfindung.

Die Erfindung wird nachfolgend in Verbindung mit einer Gleitlageranordnung als ein bevorzugtes Anwendungsgebiet der Erfindung näher beschrieben. Es versteht sich jedoch, dass die Erfindung hierauf nicht beschränkt ist, sondern vorteilhaft auch in anderen Anwendungsgebieten einsetzbar, bei denen es gilt, ein zylindrisches Hohlteil, z.B. eine Büchse, gegenüber einem anderen zylindrischen Teil, z.B. eine Welle, konzentrisch innerhalb bestimmter Toleranzen zu positionieren. Auch kann die Erfindung zur konzentrischen Positionierung gegenüber einer gemeinsamen Achse von nicht zylindrischen Teilen, z.B. mit rechteckförmigem Querschnitt, angewendet werden.

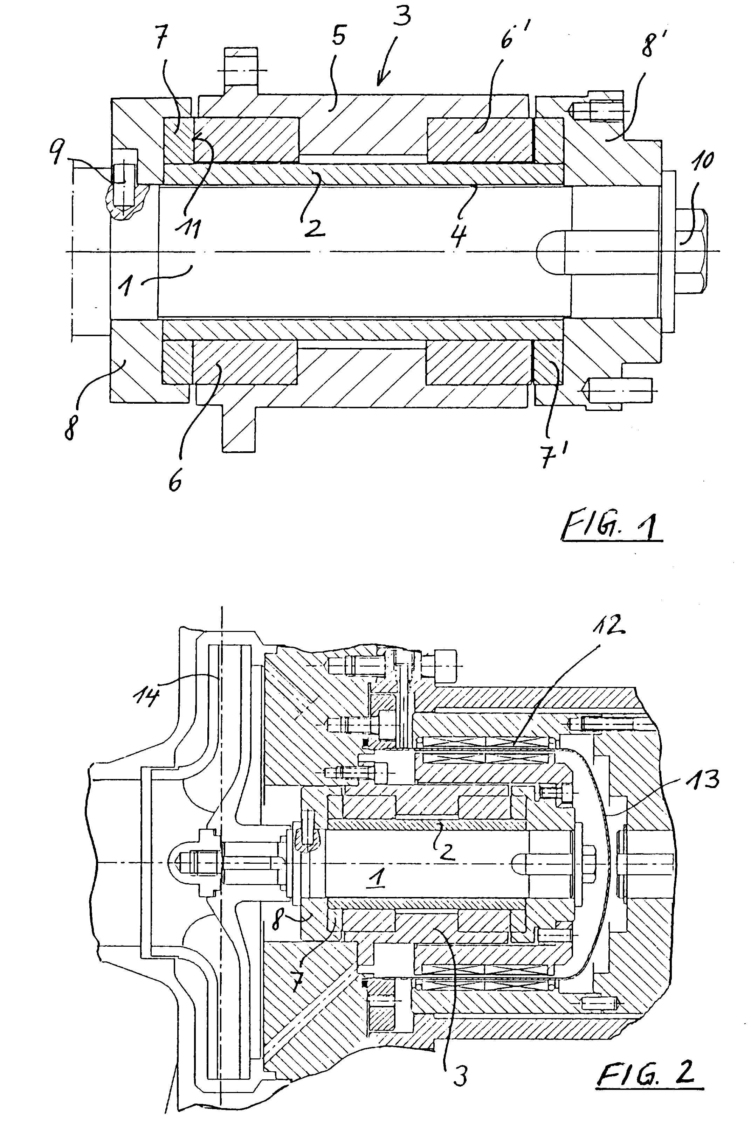

In Fig. 1 bedeuten das Bezugszeichen 1 eine Welle und das Bezugszeichen 2 eine sich mit der Welle drehende Lagerbüchse oder -schale als Teil einer allgemein mit 3 angedeuteten Gleitlageranordnung. Erfindungsgemäss wird die Welle 1 von der Lagerschale 2 mit einem radialen Abstand oder Spiel 4 umgeben, welches entsprechend dem Wärmeausdehnungsverhalten der Welle 1 bemessen ist, worauf später noch näher eingegangen wird. Die Welle 1 kann aus einem geeigneten Stahlmaterial bestehen.

Die Gleitlageranordnung 3 umfasst ferner ein äusseres die Lagerschale 2 mit radialem Abstand umgebendes und im Einsatz stationär gehaltenes Gehäuse 5, das ein Paar axial beabstandete Lagerringe 6, 6' trägt, deren innere Umfangsflächen in bekannter Weise mit der Lagerschale 2 unter Bildung eines hydrodynamischen Radiallagers zusammenwirken.

Die Lagerschale 2 ebenso wie die Lagerringe 6, 6' bestehen vorzugsweise aus einem geeigneten verschleissfesten Material. Obschon auch andere Materialien in Frage kommen, ist bevorzugtes Material ein keramischen Material wie Siliziumkarbid, das einen deutlich geringeren Wärmeausdehungskoeffizienten als Stahl besitzt.

Die erfindungsgemässe Anordnung zur konzentrischen Positionierung der Lagerschale 2 gegenüber der Mittelachse M der Welle 1 umfasst ferner ein Paar axial längs der Lagerschale 2 beabstandete ringförmige Abstützelemente oder Zentrierringe 7, 7', die auf dem äusseren Umfang der Lagerschale 2 mit einem geeigneten Passsitz aufgesetzt sind. Jedes Abstützelement 7, 7' ist an seinem äusseren, der Lagerschale 2 abgewandten Umfang in einer zugehörigen Halterung 8, 8' aufgenommen und befestigt, die wiederum gegenüber der Welle 1 in geeigneter Weise, z.B. durch einen Passstift 9 (vgl. linke Hälfte der Fig. 1) oder eine Schraubspanneinreichtung 10 (vgl. rechte Hälfte der Fig. 1), lagefixiert ist.

Jedes ringförmige Abstützelement 7, 7' ist nur längs seines äusseren Umfanges mit der betreffenden Halterung 8, 8' verbunden. Obschon geeignete andere Verbindungsmittel vorgesehen werden könnten, hat es sich als vorteilhaft erwiesen, hierfür einen Schrumpfsitz vorzusehen. Der Schrumpfsitz ist so ausgelegt, dass unter den maximalen Einsatztemperaturen der Gleitlageranordnung stets eine ausreichende Verbindung zwischen der Halterung 8, 8' und dem Abstützelement 7, 7' gewährleistet ist.

Jede Halterung 8, 8' kann aus einem Material wie dem der Welle 1, d.h. einem Stahlmaterial, bestehen.

Bei der vorbeschriebenen Gleitlageranordnung tendiert die Welle 1 unter sich ändernden Temperaturen wesentlich stärker als die Lagerschale 2 zu einer radialen Wärmedehnung, da das Stahlmaterial der Welle 1 einen Vielfach höheren Wärmeausdehungskoeffizienten als der des keramischen Material der Lagerschale 2 besitzt. Unter sich ändernden Temperaturen würde daher die Gefahr bestehen, dass die Welle 1 mit der Lagerschale 2 in Berührung träte und letztere so beanspruchte, dass es zu einem Bruch der Lagerschale 2 kommen kann. Ein derartiges Versagen verhindert das erfindungsgemäss zwischen den beiden Teilen vorgesehene ausreichend bemessene Spiel 4, das es ermöglicht, dass sich die Welle 1 innerhalb des Spieles 4 frei ausdehnen oder zusammenziehen kann, ohne dass dadurch die Lagerschale 2 beansprucht wird.

Die freie Bemessung des Spieles 4 entsprechend dem unterschiedlichen Wärmeausdehnungsverhalten der Welle 1 und der Lagerschale 2 ist möglich, da deren zentrierende Abstützung durch die Abstützelemente 7, 7' an Bereichen der Lagerschale 2 erfolgt, die radial von der Welle 1 abgewandt liegen. Damit die Abstützelemente 7, 7' sich unter Temperaturänderung in im wesentlichen der gleichen Weise verhalten wie die Lagerschale 2 und damit die zentrische Position der Lagerschale 2 gegenüber der Welle 1 erhalten bleibt, bestehen die Abstützelemente 7, 7' aus vorzugsweise dem gleichen Material wie die Lagerschale 2, so dass sie sich entsprechend der Lagerschale 2 radial dehnen bzw. zusammenziehen. Wenn erwünscht, könnte für die Abstützelemente 7, 7' auch ein anderes Material verwendet werden, vorausgesetzt dessen Wärmeausdehnungskoeffizient ist gleich oder annähernd gleich dem des Materials der Lagerschale 2.

Ferner sollte das Material der Abstützelemente 7, 7' eine geeignet höhere Steifigkeit als Stahl besitzen, da in diesem Fall die Wärmedehnung der Halterungen 8, 8' wegen der geringeren Steifigkeit des Stahlmaterials praktisch keine Auswirkungen auf das Wärmeausdehnungsverhalten der Abstützelemente 7, 7' hat. Im übrigen bestehen hinsichtlich der Auslegung der Halterungen 8, 8' keine Einschränkungen, so dass diese leicht so ausgebildet werden können, dass ihr Einfluss auf das Wärmeausdehnungsverhalten der Abstützelemente 7, 7' auch durch konstruktive Massnahmen weiter minmiert werden kann.

Die Abstützelemente 7, 7' können ferner einander zuweisende axiale Stirnflächen 11, 11' haben, die in Verbindung mit den gegenüberliegenden axialen Stirnflächen der Lagerringe 6, 6' Axiallager zur axialen Fixierung der Gleitlageranordnung schaffen.

Fig. 2 zeigt den Einsatz der vorerwähnte Gleitlageranordnung bei einer Kreiselpumpe, die berührungsfrei über eine Magnetkupplungsanordnung 12 angetrieben ist. Die Abdichtung der Pumpe erfolgt antriebsseitig mittels eines Spalttopfes 13, der sich bereichsweise durch den Spalt zwischen den an- und abtriebsseitigen Magneten der Magnetkupplungsanordnung 12 erstreckt. Der Aufbau derartiger Kreiselpumpen ist dem Fachmann grundsätzlich bekannt und braucht hier nicht näher beschrieben zu werden.

Die Welle 1, die das Kreiselpumpenrad 14 trägt, ist in einer Gleitlageranordnung 3 gelagert, deren Lagerschale 2 in der in Verbindung mit Fig. 1 beschriebenen Weise zentriert ist. Aufgrund dessen können für die Gleitlageranordnung 3 nicht nur verschleissfeste Materialien verwendet werden, sondern kann ausserdem der Spalt zwischen den an- und abtriebsseitigen Magneten in der erwünschten Weise eng bemessen werden, ohne dass die Gefahr einer Beschädigung des Spalttopfes 13 aufgrund von Unzentrizitäten besteht. Die magnetischen Spaltverluste können daher dank der erfindungsgemässen Anordnung entsprechend minimiert werden.

## Patentansprüche

1. Anordnung zur konzentrischen Positionierung eines ersten Teiles relativ zu einem zweiten Teil, insbesondere einer Büchse (2) gegenüber einer Welle (1), wobei die Teile aus Materialien mit unterschiedlichen Wärmeausdehnungskoeffizienten gebildet sind, dadurch gekennzeichnet, dass zwischen den beiden Teilen (1,2) ein radiales Spiel (4) vorgesehen ist, und dass der erste Teil (2) längs in Radialrichtung vom zweiten Teil (1) abgewandter Bereiche an einer gegenüber dem zweiten Teil (1) konzentrisch gehaltenen Widerlageranordnung (7) mit gleichem oder ähnlichem Wärmeausdehnungverhalten wie das des ersten Teiles (2) zentrierend abgestützt ist.

2. Anordnung nach Anspruch 1, dadurch gekennzeichnet, dass die Widerlageranordnung ein Paar axial beabstandete ringförmige Abstützelemente (7) aus einem Material mit gleichem oder ähnlichem Wärmeausdehnungskoeffizienten wie der des ersten Teiles (2) umfasst.

3. Anordnung nach Anspruch 2, dadurch gekennzeichnet, dass die Abstützelemente (7) jeweils in einer mit dem zweiten Teil (1) zentrisch verbundenen Halterung (8) aus einem Material mit gleichem oder ähnlichem Wärmeausdehnungskoeffizienten wie der des zweiten Teiles nur längs in Radialrichtung vom ersten Teil (2) abgewandter Bereiche, vorzugsweise durch Schrumpfsitz, gehalten sind.

4. Anordnung nach einem der vorhergehenden Ansprüche, dadurch gekennzeichnet, dass der erste Teil (2) aus einem verschleissfesten nichtmetallischen Material, insbesondere einem keramischen Material gebildet ist.

5. Anordnung nach einem der vorhergehenden Ansprüche, dadurch gekennzeichnet, dass der erste Teil eine Lagerschale (2) einer Gleitlageranordnung (3) umfasst, und dass die Widerlageranordnung (7) gegenüberliegende axiale Stirnflächen (11) zur axialen Lagefixierung der Gleitlageranordnung aufweist.

6. Verwendung einer Anordnung nach einem der vorhergehenden Ansprüche bei einer Gleitlageranordnung (3) zur Lagerung der Abtriebswelle (1) einer Magnetkupplungsanordnung (12).

## Claims

1. An assembly for concentrically positioning a first part relative to a second part, in particular a sleeve (2) relative to a shaft (1), said parts being made of materials with different coefficients of thermal expansion, characterized in that a radial clearance (4) is provided between said two parts (1,2), and that said first part (2) is supported in a centering manner along portions thereof facing radially away from said second part (1) at an abutment arrangement (7) concentrically held relative to said second part (1), said abutment arrangement being made of a material having same or similar characteristics of thermal expansion as that of said first part (2).

2. The assembly according to claim 1, characterized in that said abutment arrangement comprises a pair of axially spaced annular supporting elements (7) made of a material having a same or similar coefficient of thermal expansion as that of said first part (2).

3. The assembly according to claim 2, characterized in that each of said supporting elements (7) is held by a mounting support (8) centrically connected to said second part (1) and made of a material having a same or similar coefficient of thermal expansion as that of said second part, said supporting elements being held only along portion thereof facing radially away from said first part (2), preferably by shrink fit.

4. The assembly according to one of the preceding claims, characterized in that said first part (2) being made of a wear-resistant non-metallic material, in particular a ceramic material.

5. The assembly according to one of the preceding claims, characterized in that said first part comprises a bearing sleeve (2) of a sleeve bearing arrangement (3), and that the abutment arrangement (7) comprises axially facing opposite surfaces (11) for axially positioning said sleeve bearing arrangement.

6. Use of an assembly according to one of the preceding claims for a sleeve bearing arrangement (3) for supporting the driving shaft (1) of a magnetic clutch arrangement (12)

## Revendications

1. Dispositif de positionnement concentrique d'une première pièce par rapport à une deuxième pièce, en particulier d'un manchon (2) par rapport à un arbre (1), les deux pièces étant constituées de matériaux ayant des coefficients de dilatation thermique différents, caractérisé en ce qu'un jeu radial (4) est prévu entre les deux pièces (1, 2) et en ce que la première pièce (2) est supportée et centrée le long de zones radialement opposées à la deuxième pièce (1), par un moyen de contre-palier (7) ayant un comportement identique ou semblable à celui de la première pièce (2) en ce qui concerne la dilatation thermique, maintenu concentrique par rapport à la deuxième pièce (1).

2. Dispositif selon la revendication 1, caractérisé en ce que le moyen de contre-palier comprend une paire d'éléments de support (7) annulaires espacés axialement constitués d'un matériau ayant un coefficient de dilatation thermique identique ou semblable à celui de la première pièce (2).

3. Dispositif selon la revendication 2, caractérisé en ce que les éléments de support (7) sont chacun maintenu seulement le long de zones radialement opposées à la première pièce (2), de préférence par ajustement serré, dans un support (8) fixé à et centré sur la deuxième pièce (1) et constitué d'un matériau ayant un coefficient de dilatation thermique identique ou semblable à celui de la deuxième pièce.

4. Dispositif selon l'une quelconque des revendications précédentes, caractérisé en ce que la première pièce (2) est constituée d'un matériau non métallique résistant à l'usure, en particulier d'un matériau céramique.

5. Dispositif selon l'une quelconque des revendications précédentes, caractérisé en ce que la première pièce comprend une coquille de coussinet (2) d'une structure de palier lisse (3), et en ce que le moyen de contre-palier (7) présente des faces axiales frontales se faisant face (11) pour la fixation en position axiale de la structure de palier lisse.

6. Utilisation d'un dispositif selon l'une quelconque des revendications précédentes dans une structure de palier lisse (3) pour le montage à rotation de l'arbre mené (1) d'un accouplement à aimants (12).
